(19) Europäisches Patentamt
European Patent Office
Office européen des brevets

(11) Publication number: 0 449 455 A2

# (12) EUROPEAN PATENT APPLICATION

(21) Application number: 91302164.8

(22) Date of filing: 14.03.91

(51) Int. Cl.[5]: C10M 133/56, C10L 1/22, // C10N10:02, C10N30:10

(30) Priority: 22.03.90 US 497370

(43) Date of publication of application: 02.10.91 Bulletin 91/40

(84) Designated Contracting States: BE DE FR GB IT NL

(71) Applicant: MOBIL OIL CORPORATION
3225 Gallows Road
Fairfax, Virginia 22037-0001 (US)

(72) Inventor: Farng, Liehpao Oscar
15 Yeger Drive
Lawrenceville, New Jersey 08648 (US)
Inventor: Horodysky, Andrew Gene
139 Weston Drive
Cherry Hill, New Jersey 08003 (US)

(74) Representative: Colmer, Stephen Gary et al
Patent Department c/o Mobil Services
Company Limited Mobil Court 3 Clements Inn
London WC2A 2EB (GB)

## (54) Copper salts of aryl amine substituted carboxylic anhydride derivatives as lubricating oil additives.

(57) Copper salts of aryl amine-substituted carboxylic anhydride derivatives are prepared by reacting a long chain carboxylic acid, carboxylic anhydride or carboxylic acid-forming compound having from about 30 to 200 carbon atoms with a secondary aryl amine, and reacting the resultant intermediate with a copper salt to obtain the final reaction product. The reaction product may be used as an additive to a lubricant to improve the antioxidant properties thereof.

EP 0 449 455 A2

# COPPER SALTS OF ARYL AMINE SUBSTITUTED CARBOXYLIC ANHYDRIDE DERIVATIVES AS LUBRICATING OIL ADDITIVES

This invention relates to new chemical compositions and to lubricating oil compositions containing these compositions. More particularly it relates to a novel class of chemical compositions which act as antioxidants.

Copper carboxylates such as copper oleate have been reportedly used as an antioxidant according to European Patent No. 92946. British Patent No. 2,058,482 discloses copper oleate as an engine oil antioxidant. Copper salts of succinic anhydride derivatives have also been reported to be useful as antioxidants according to European Patent No. 149,549 and U.S. Patent No. 4,552,677. The use of carboxylic compounds as antirust and anticorrosion additives in lubricants has been well documented and includes derivatives of oleic acid and oleyl sarcosine.

U.S. Patent No. 2,458,425 to Rocchini, unlike the present invention which is directed to copper salts of secondary aryl amines, discloses metal salts of monoamides of alkenyl-substituted succinic acids, useful in mineral lubricating oil compositions. The alkenyl chain may contain 5 to 18 or more carbon atoms but preferably 10-12 carbon atoms. The alkenyl groups of the instant compounds have at least about 30 to 50 carbon atoms. Further, as disclosed hereinbelow, compounds representative of Rocchini have been found to be insoluble at 1% concentrations in various present day mineral and synthetic fluids.

In accordance with the present invention, it has now been determined that lubricant compositions containing small concentrations of copper salts of aryl amine-substituted carboxylic anhydride derivatives such as cupric carboxylic salts of the reaction product of polybutenyl succinic anhydride with diphenylamine, possess excellent antioxidant activity. In another sense this invention comprises reacting a substituted succinic anhydride, or other type of carboxylic anhydride, or diacid-forming species, or hydrocarbyl-substituted diacid in almost equal molar quantities with an aryl amine or hydrocarbyl-substituted aryl amine (preferably a secondary aryl amine) to form an intermediate substituted succinic acid derivative according to what is believed to be the following reaction:

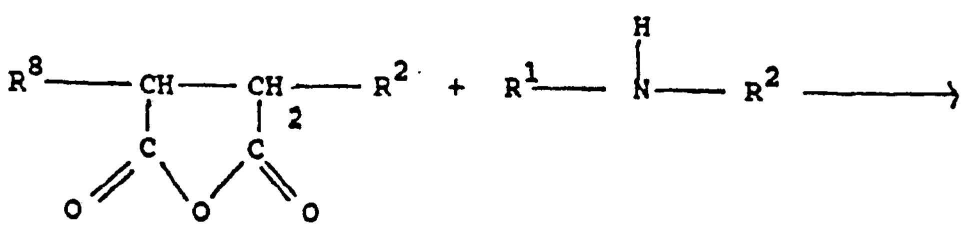

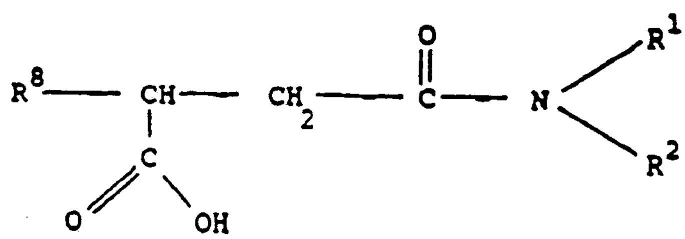

and

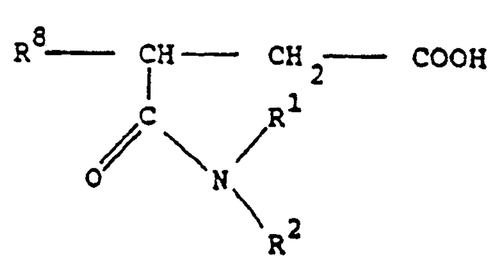

wherein $R^1$ and $R^2$ are selected from the group consisting of aromatic, alkyl-substituted aromatic, and hydrocarbyl groups, each containing 1 to 18 carbon atoms per molecule and where both are not aliphatic groups

at the same time;

wherein $R^8$ is a $C_{30}$-$C_{50}$ to about a $C_{200}$ hydrocarbyl group and can additionally contain sulfur, nitrogen and/or oxygen, or has the structural formula:

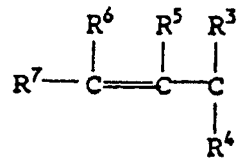

wherein $R^3$ to $R^7$ are each selected from the group consisting of hydrogen, and hydrocarbyl, aralkyl or cycloalkyl groups.

The intermediate compound is then reacted with a copper salt such as copper carbonate, copper hydroxide, copper acetate or other suitable copper salts to give the final resulting product having the following structure in what is believed to be the following reaction:

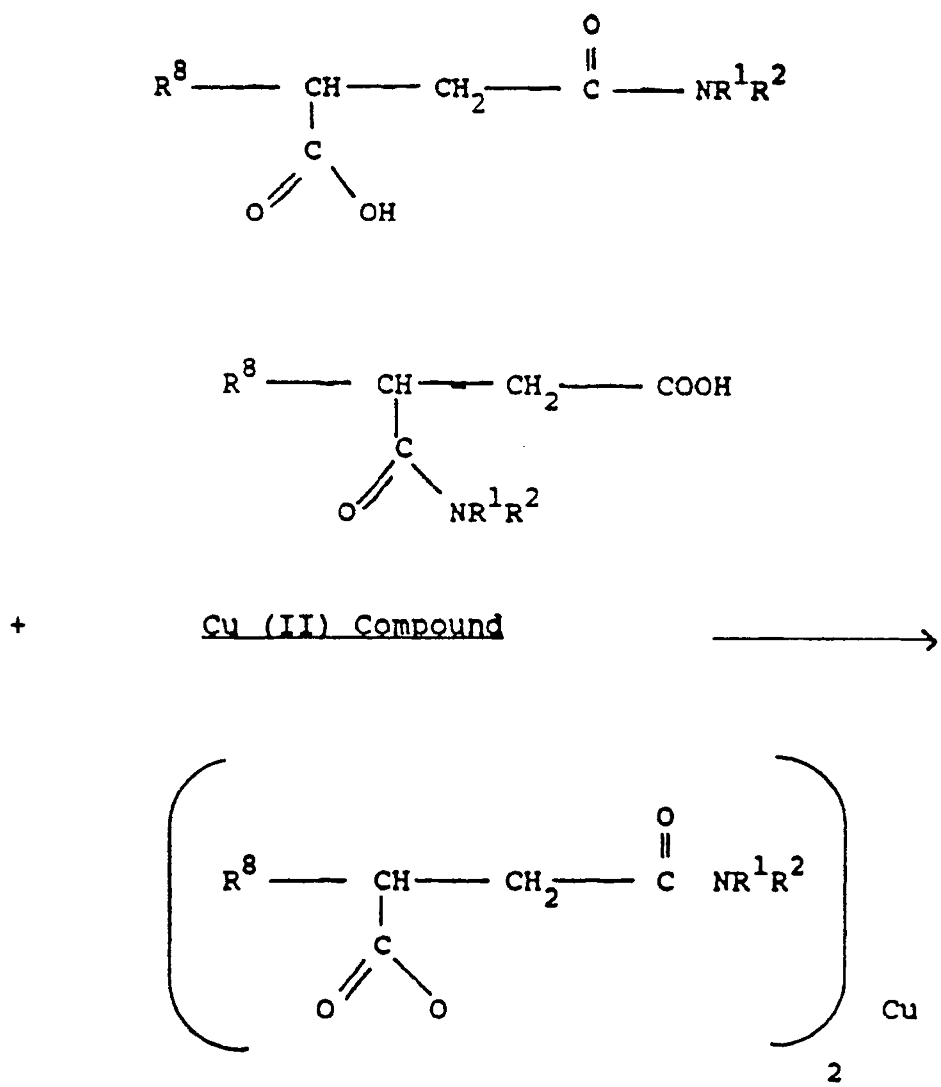


and

+

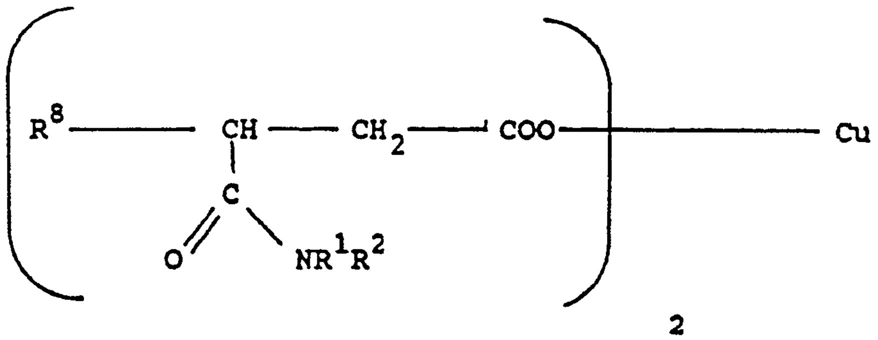

Cupric Salts

The R groups have the designations provided above.

As noted above, one aspect of this invention comprises the process for making the additive material of improved performance wherein there is a first reaction between a substituted dicarboxylic anhydride, such as succinic anhydride and an amine, preferably a secondary aryl amine. The resulting reactive product is then reacted with a copper compound to provide the final composition.

The carboxylic anhydride preferably is a dicarboxylic anhydride and even more preferably a substituted succinic anhydride. Other anhydrides which can be used in this invention are dimer acids or trimer acids such as oleic acid, propylene or butylene oligomer substituted acids or acid anhydrides or any hydrocarbyl-substituted carboxylate generating species.

The amine reactant in this invention is preferably a secondary aryl amine, that is, one in which at least one of the substituents contains an aromatic substituent.

Examples of the more preferred amines are N-methylaniline, diphenylamine, substituted diphenylamines such as octylated diphenylamines, N,N-disubstituted phenylenediamines, substituted dehydroquinolines, and substituted phenyl alphanaphthylamines.

The copper salt preferably is copper oleate but can be any number of other copper compounds such as basic cupric acetate ($Cu(C_2H_3O_2)$ $CuO{\cdot}6H_2O$), cupric carbonate ($CuCO_3$), basic cupric carbonate ($CuCO_3$ $Cu(OH)_2$), cuprous hydroxide ($CuOH$) and cupric hydroxide ($Cu(OH)_2$).

The first two reactants are reacted in a molar ratio of 1 mole of carboxylic anhydride to 1 mole of amine. The resulting product is then reacted again on a 1 to 1 molar basis with the copper salt. Temperature conditions are 10 to 200°C for the first reaction and 10 to 200°C for the second reaction, both at ambient pressure.

The lubricant compositions of the invention may comprise any oleaginous materials that require lubricative properties under extreme pressure conditions and require protection against excessive wear under operating conditions, but normally exhibit insufficient anticorrosion properties.

Especially suitable for use with the additives of this invention are liquid hydrocarbon oils of lubricating viscosity. Lubricant oils, improved in accordance with the present invention, may be of any suitable lubricating viscosity. In general, the lubricant compositions may comprise any mineral or synthetic oil of lubricating viscosity or mixtures thereof. The additives of this invention are especially useful in greases and in automotive fluids such as brake fluids and power brake fluids, transmission fluids, power steering fluids, various hydraulic fluids and gear oils and in liquid hydrocarbyl fuels.

In instances where synthetic oils are desired in preference to refined petroleum or mineral oil they may be employed alone or in combination with a mineral oil. They may also be used as the vehicle or base of grease compositions. Typical synthetic lubricants include polyisobutylene, polybutenes, hydrogenated polydecenes, polypropylene glycol, polyethylene glycol, trimethylol propane esters, neopentyl and pentaerythritol esters of carboxylic acids, di(2-ethylhexyl) sebacate, di(2-ethylhexyl) adipate, dibutyl phthalate, fluorocarbons, silicate esters, silanes, esters of phosphorus-containing acids, liquid ureas, ferrocene derivatives, hydrogenated mineral oils, chain-type polyphenols, siloxanes and silicones (polysiloxanes), alkyl-substituted diphenyl ethers typified by a butyl-substituted bis(p-phenoxy phenyl) ether, phenoxy phenylethers, dialkylbenzenes, etc.

As hereinbefore indicated, the aforementioned additives can be incorporated as additives in grease compositions. When high temperature stability is not a requirement of the finished grease, mineral oils having a viscosity of at least 40 SSU at 150°F (65.5°C) are useful. Otherwise, those falling within the range of from about 60 SSU to about 6,000 SSU at 100°F (37.8°C) may be employed. The lubricating compositions of the improved

greases of the present invention, containing the above-described additives, are combined with a grease forming quantity of a thickening agent. For this purpose, a wide variety of materials can be dispersed in the lubricating oil in grease-forming quantities in such degree as to impart the desired consistency to the resulting grease composition. Exemplary of the thickening agents that may be employed in the grease formulation are metal soaps as well as non-soap thickeners, such as surface-modified clays and silicas, aryl ureas, calcium complexes and similar materials. In general, grease thickeners are employed which do not melt or dissolve when used at the required temperature within a particular environment; however, in all other respects, any material which is normally employed for thickening or gelling oleaginous fluids or forming greases may be used in the present invention.

Generally, the lubricants and fuels of the present invention contain an amount of the sulfurized product effective to improve extreme pressure properties and antiwear and oxidation characteristics. Normally this amount will be about 0.01-20%, preferably about 0.01-10%, of the total weight of the lubricant.

The invention also contemplates the use of other additives in combination with the sulfurized olefin product. Such additives include, for example, detergents and dispersants of the ash-producing or ashless type, corrosion-inhibiting agents, auxiliary oxidation-inhibiting agents, pour point depression agents, auxiliary extreme pressure agents, color stabilizers and anti-foam agents.

The following examples serve to illustrate the present invention, but are not intended as limitations thereon unless otherwise stated.

## Example I

Approximately 384.5 grams (0.25 mole) of polybutenyl succinic anhydride (molecular weight = 1538 prepared by the reaction of molar amounts of polybutene having a molecular weight of 900 and maleic anhydride), 400 milliliters of toluene, and 42.3 grams (0.25 mole) of diphenylamine were charged to a reaction vessel. This mixture was heated to 120°C and held at 119-121°C under a nitrogen gas blanket with agitation over a course of three hours. Then the reaction mixture was cooled to approximately 70°C. An amount of 13.8 grams (0.0625 mole) of basic copper (II) carbonate ($CuCO_3$ $Cu(OH)_2$) was then added. This reaction mixture was further refluxed at 120°C for five additional hours. The volatiles were removed by vacuum distillation, leaving a viscous, greenish fluid as the product. The product contained 1.6% of copper (corresponding to a theoretical percentage of 1.8%).

## Example II

Approximately 384.5 gm of polybutenyl succinic anhydride (molecular weight = 1538), 400 milliliters of toluene and 26.8 grams (0.25 mole) of N-methylaniline were reacted as generally described in Example I. As the reaction was completed, and cooled to 70°C, 25 grams (0.236 mole) of cupric acetate monohydrate ($Cu(OAc_2)_2$ $H_2O$) was added. This reaction mixture was further refluxed at 120°C for five additional hours. Then the volatiles were removed under house vacuum. This gave a deep green product containing 1.8% of copper (corresponding to a theoretical percentage of 1.79%).

## Example III

The calcium salt of dodecenyl succinic acid mono(dicyclohexyl) amides (a representative compound in accordance with Rocchini, U.S. Patent No. 2,458,425) was synthesized as follows:

Approximately 181 parts by weight of dicyclohexylamine were added in small increments to approximately 266 parts by weight of dodecenyl-succinic acid anhydrides. The latter product was a light yellow oily liquid commercial product obtainable by condensing a $C_{12}$ olefin with maleic anhydride. The reaction mixture was heated to 100 to 105°C for two hours whereby reaction took place readily to form the desired alkenyl-succinic acid mono-dicyclohexyl amides. The latter product was a dark reddish-brown, very viscous tacky liquid (weight: 447 parts).

Approximately 44.7 parts by weight of this product were dissolved in acetone, and approximately 5.4 parts by weight of sodium methoxide dissolved in methyl alcohol were added with stirring. The sodium salts of the alkenyl succinic acid mono-(dicyclohexyl)-amides thus formed partially precipitated from the acetone solution. Sufficient distilled water was added to obtain a clear solution. Approximately 5.55 parts by weight of calcium chloride dissolved in water were then added, whereby the calcium salts of the alkenyl-succinic acid mono-dicyclohexyl-amides precipitated as a flocculent solid. This product was filtered off and dried in air.

The products from Examples I and II were blended into fully formulated oils and evaluated for oxidation

stability. Basically the test lubricant is subjected to a stream of air which is bubbled through at a rate of 5 liters per hour at 425°F. (218.3°C.) for 24 hours. Present in the composition are samples of metals commonly used in engine construction, namely, iron, copper, aluminum and lead. Additional details of this test are disclosed in U.S. Patent 3,682,980. Reductions in viscosity increase or limiting of neutralization number (or both) show effective control.

TABLE I

Antioxidant Evaluation (425°F (218.3°C.), 24 hrs.)

| | Additive Conc. (Wt.%) | Sludge Rating | Change in Acid Value (ΔNN) | Change in Viscosity (%ΔKV) |
|---|---|---|---|---|
| Base Oil (150 second, fully formulated, solvent refined paraffinic bright oil containing defoamant/demulsifier/antiwear/anticorrosion/EP/antirust performance package) | - | Medium | 6.53 | 177.9 |
| Cupric Salt (Example I) | 0.5 | Light | 5.03 | 123.5 |
| Cupric Salt (Example II) | 0.5 | Light | 4.59 | 109.1 |
| Cupric Salt of hindered phenol substituted succinic anhydride derivative | 1.0 | Light | 5.94 | 117.5 |

TABLE II
Antioxidant Evaluation (425°F.(218.3°C.) 24 hrs.)

| | Additive Conc. (Wt.%) | Sludge Rating | Change in Acid Value (ΔNN) | Change in Visocsity (%ΔKV) |
|---|---|---|---|---|
| Base Oil (5W-30 fully formulated synthetic engine oil containing VI improver/friction reducer/detergent/dispersant/antiwear/anticorrosion/EP/antirust/phenolic antioxidant performance package) | -- | Nil | 5.54 | 38.0 |
| Cupric Salt (Example I) | 0.5 | Nil | 5.09 | 25.7 |
| Cupric Salt (Example II) | 0.5 | Nil | 4.39 | 14.6 |

The products of Examples I and II in a fully formulated mineral oil control the increase in viscosity and acidity of the test oil much better than the base oil itself, and even better than with a greater concentration of cupric salt of the hindered phenol substituted succinic anhydride derivative as shown in Table I.

The products of Examples I and II also show excellent control of oxidative stability in the fully formulated synthetic oil as described in Table II.

Example II was also evaluated in hydraulic oil formulations as described in Table A.

Table A: Antioxidant Evaluation

| | Additive Conc(wt%) | Change in viscosity (%ΔKV) | Change in Acid Value (ΔNN) |
|---|---|---|---|
| Base oil (fully formulated hydraulic mineral oil containing antiwear/EP/anticorrosion/antirust/detergent/dispersant additives as well as multifunctional additives in performance package) | -- | -- | -- |
| Cupric Salt (Example II) | 0.25 | 46 | 1.98 |
| 2,6-di-tert-butyl-4-methylphenol (Commercial hindered phenol antioxidant) | 0.25 | 55 | 2.21 |

Example II in accordance with the invention also clearly and significantly outperformed the commercial hindered phenol antioxidant in hydraulic oil formulations.

Solubility Test:

Example III hereinabove identified as a compound representative of Rocchini, U.S. Patent No. 2,458,425 was tested for solubility in accordance with well-known procedures.

The product of Example III was dissolved in 200 sec SPN (solvent paraffinic neutral) mineral oil as well as alpha-olefin derived PAO synthetic basestock and found not soluble at 0.5-1% concentration. This product was also put into fully formulated synthetic engine oil and found totally insoluble (1% conc.). The compounds of Rocchini thus do not appear to be soluble in modern lubricant environments.

The use of additive concentrations of the copper compositions of this invention in automotive and industrial lubricants sufficiently enhances the stability and service life of the product. These compositions also provide the option of omitting potentially undesirable phosphorous or sulfur compounds in lubricating oil compositions.

## Claims

1. A reaction product comprising a copper salt of an aryl amine-substituted carboxylic anhydride derivative obtained by a process characterized by the steps of reacting a long chain carboxylic acid, carboxylic anhydride or carboxylic acid-forming compound having at least about 30-50 to 200 carbon atoms with a secondary aryl amine to obtain an intermediate product, and reacting said intermediate product with a copper salt to obtain the final reaction product.

2. The reaction product of claim 1 wherein said acid-forming compound contains a substituent derived by reacting an equimolar amount of polybutene having a molecular weight of about 900 with a dicarboxylic anhydride.

3. The reaction product of claim 1 wherein said dicarboxylic anhydride is succinic anhydride or maleic anhydride.

4. A reaction product comprising a copper salt of an aryl amine-substituted carboxylic anhydride derivative obtained by a process characterized by the steps of reacting a long chain carboxylic acid, carboxylic anhydride or carboxylic acid-forming compound corresponding to the acid anhydride of the formula:

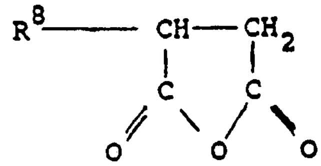

wherein $R^8$ is a $C_{30-50}$ to about a $C_{200}$ hydrocarbyl group or a $C_{30}$ to $C_{200}$ hydrocarbyl group additionally containing sulfur, nitrogen or oxygen, or is a a substituent derived by reacting an equimolar amount of polybutene having a molecular weight of about 900 and said acid, anhybride or acid-forming compound, with a secondary aryl amine of the formula:

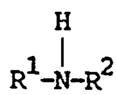

wherein $R^1$ and $R^2$ are selected from the group consisting of aromatic, alkyl-substituted aromatic and hydrocarbyl groups, each containing from 1 to 18 carbon atoms, at least one of $R^1$ and $R^2$ being an aromatic group, to obtain an intermediate product, and reacting said intermediate product with a copper salt to obtain the final reaction product.

5. The reaction product of claim 4 wherein the carboxylic acid, carboxylic anydride or acid-forming compound is a dimer or trimer acid or is derived therefrom.

6. The reaction product of claim 4 wherein the carboxylic acid is dimerized oleic acid or succinic acid.

7. The reaction product of claim 4 wherein the carboxylic anhydride is succinic anhydride.

8. The reaction product of claim 4 wherein the secondary aryl amine is selected from the group consisting of N-methylaniline, diphenylamine, octylated diphenylamine, N,N-disubstituted phenylenediamines, substituted dihydroquinolines and substituted phenyl alpha-naphthylamines.

9. The reaction product of claim 8 wherein the amine is a substituted diphenylamine.

10. The reaction product obtained by reacting a carboxylic anhydride of the formula:

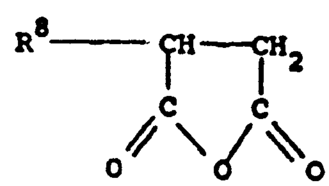

wherein $R^8$ is a $C_{30-50}$ to $C_{200}$ hydrocarbyl group or a $C_{30}$-$C_{50}$ to $C_{200}$ hydrocarbyl group additionally containing sulfur, nitrogen or oxygen, or is derived from reacting an equimolar amount of polybutene having a molecular weight of about 900 and said carboxylic anhydride, with a secondary aryl amine of the formula:

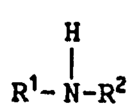

wherein $R^1$ and $R^2$ are selected from the group consisting of aromatic, alkyl-substituted aromatic and hydrocarbyl groups, each containing from 1 to 18 carbon atoms, at least one of $R^1$ and $R^2$ being an aromatic group, and where $R^8$ may also have the following structure:

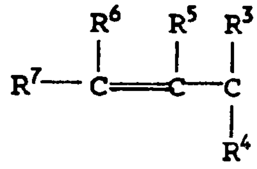

wherein $R^3$ to $R^7$ are each individually selected from hydrogen, hydrocarbyl, aralkyl or cycloalkyl to obtain an intermediate product, and reacting said intermediate product with a copper salt to obtain the final reaction product.

**11.** The reaction product of claim 10 wherein the aryl amine is diphenylamine.

**12.** The reaction product of claim 10 wherein the aryl amine is N-methylaniline.

**13.** The reaction product of Claim 10 wherein the copper salt is basic copper carbonate.

**14.** The reaction product of Claim 10 wherein the copper salt is cupric acetate.

**15.** A lubricant composition comprising a major proportion of a lubricant and a minor proportion of a reaction product comprising a copper salt of an aryl amine-substituted carboxylic anhydride derivative obtained by a process characterized by the steps of reacting a long chain carboxylic acid, carboxylic anhydride or carboxylic acid-forming compound having at least about 30-50 to 200 carbon atoms with a secondary aryl amine to obtain an intermediate product, and reacting said intermediate product with a copper salt to obtain the final reaction product.

**16.** A lubricant composition comprising a major proportion of a lubricant and a minor proportion of a reaction product comprising a copper salt of an aryl amine-substituted carboxylic anhydride derivative obtained by a process characterized by the steps of reacting a long chain carboxylic acid, carboxylic anhydride or carboxylic acid-forming compound corresponding to the acid anhydride of the formula:

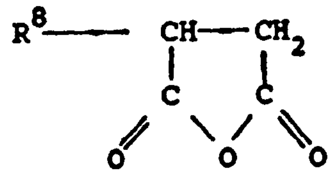

wherein $R^8$ is a $C_{30\text{-}50}$ to about a $C_{200}$ hydrocarbyl group or a $C_{30}$ to $C_{200}$ hydrocarbyl group additionally containing sulfur, nitrogen or oxygen, or is a substituent derived by reacting an equimolar amount of polybutene having a molecular weight of about 900 and said acid, anhydride or acid-forming compound, with a secondary aryl amine of the formula:

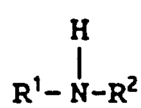

wherein $R^1$ and $R^2$ are selected from the group consisting of aromatic, alkyl-substituted aromatic and hydrocarbyl groups, each containing from 1 to 18 carbon atoms, at least one of $R^1$ and $R^2$ being an aromatic group, to obtain an intermediate product, and reacting said intermediate product with a copper salt to obtain the final reaction product.

**17.** The lubricant composition of claim 16 wherein the carboxylic acid, carboxylic anhydride or acid-forming

compound is a dimer or trimer acid or is derived therefrom.

**18.** The lubricant composition of claim 16 wherein the carboxylic acid is dimerized oleic acid or succinic acid.

**19.** The lubricant composition of claim 16 wherein the carboxylic anhydride is succinic anhydride.

**20.** The lubricant composition of claim 16 wherein the aryl amine is selected from the group consisting of N-methylaniline, diphenylamine, octylated diphenylamine, N,N-disubstituted phenylenediamines, substituted dihydroquinolines and substituted phenyl alphanaphthylamines.

**21.** The lubricant composition of claim 16 wherein the amine is a substituted diphenylamine.

**22.** A lubricant composition comprising a major proportion of a lubricant and a minor proportion of a reaction product obtained by reacting a carboxylic anhydride of the formula:

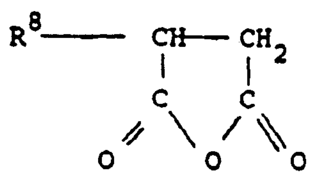

wherein $R^8$ is a $C_{30}$ to about a $C_{200}$ hydrocarbyl group or a $C_{30}$-$C_{200}$ hydrocarbyl group additionally containing sulfur, nitrogen or oxygen, and is derived from reacting an equimolar amount of polybutene having a molecular weight of about 900 and said carboxylic anhydride, with a secondary aryl amine of the formula:

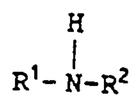

wherein $R^1$ and $R^2$ are selected from the group consisting of aromatic, alkyl-substituted aromatic and hydrocarbyl groups, each containing 1 to 18 carbon atoms, at least one of $R^1$ or $R^2$ being an aromatic group, to obtain an intermediate product, and reacting said intermediate product with a copper salt to obtain the final reaction product.

**23.** The lubricant composition of claim 22 wherein the aryl amine is diphenylamine.

**24.** The lubricant composition of claim 22 wherein the aryl amine is N-methylaniline.

**25.** The lubricant composition of claim 22 wherein the copper salt is basic copper carbonate.

**26.** The lubricant composition of claim 22 wherein the copper salt is cupric acetate.

**27.** A method for preparing a lubricant additive characterized by the steps of reacting a carboxylic acid, carboxylic anhydride, or acid-forming compound corresponding to the acid anhydride of the formula:

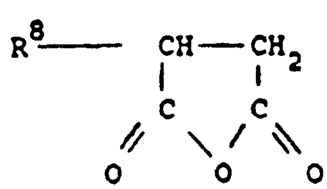

wherein $R^8$ is a $C_{30-50}$ to about a $C_{200}$ hydrocarbyl group or a $C_{30}$ to $C_{200}$ hydrocarbyl group additionally containing sulfur, nitrogen or oxygen, or is a substituent derived by reacting an equimolar amount of polybutene having a molecular weight of about 900 and said acid, anhydride or acid-forming compound, with a secondary aryl amine of the formula:

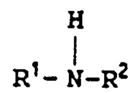

wherein $R^1$ and $R^2$ are selected from the group consisting of aromatic, alkyl-substituted aromatic and hydrocarbyl groups, each containing from 1 to 18 carbon atoms, at least one of $R^1$ and $R^2$ being an aromatic group, to obtain an intermediate product, and reacting said intermediate product with a copper salt to obtain the final reaction product.

28. The method of claim 27 wherein $R^8$ is a $C_{30}$ to $C_{200}$ hydrocarbyl group or a $C_{30}$ to $C_{200}$ hydrocarbyl group additionally containing sulfur, nitrogen or oxygen.

29. Use of the reaction product of claim 1 in a lubricant composition comprising a major amount of an oil of lubricating viscosity or grease prepared therefrom and a minor amount of said reaction product to improve the antioxidant properties of the lubricant composition.

30. Use of the reaction product of claim 4 in a lubricant composition comprising a major amount of an oil of lubricating viscosity or grease prepared therefrom and a minor amount of said reaction product to improve the antioxidant properties of the lubricant composition.